# EUROPEAN PATENT APPLICATION

(11) **EP 4 671 620 A1**
(43) Date of publication of application: **31.12.2025**
(21) Application number: 24201711.9
(22) Date of filing: 20.09.2024
(51) Int. Cl.: F24C 15/14, F24C 15/20

(54) **OIL FUME PURIFICATION DEVICE AND HOUSEHOLD APPLIANCE**

(30) Priority: 25.06.2024 CN 202410833866; 25.06.2024 CN 202421473832 U
(71) Applicant: Foshan Shunde Midea Washing Appliances Manufacturing Co., Ltd., Foshan, Guangdong 528311 (CN)
(72) Inventor: ZOU, Yihua, Foshan (CN); KONG, Lingyu, Foshan (CN); OUYANG, Weiming, Foshan (CN)
(74) Representative: Ran, Handong

(57) **Abstract**

Provided are an oil fume purification device and a household appliance. The oil fume purification device includes a fan assembly, a water guide member, a filter assembly, and a water collection box. The fan assembly has an air inlet and an air outlet and is configured to form an airflow flowing from the air inlet to the air outlet. The water guide member is disposed at the air inlet of the fan assembly and has an accommodation groove. The accommodation groove has a bottom surface constructed as an inclined surface. The filter assembly is disposed in the accommodation groove, and is configured to filter and condense oil fume to form condensed water. The water collection box is connected at a lower end side of the bottom surface of the accommodation groove, and is configured to collect the condensed water flowing out of the water guide member. Use safety of the oil fume purification device is improved.

## Description

### FIELD

The present invention relates to a field of household appliances, and more particularly, to an oil fume purification device and a household appliance.

### BACKGROUND

Oil fume is produced during cooking, which not only pollutes air environment, but also harms human health. A range hood can quickly discharge the oil fume, which reduces pollution to the air environment in the kitchen and damages to the health of people in the kitchen. In the related art, water vapor in the oil fume directly drips into an interior of a fan system after condensation, which results in unpleasant odors since the interior of the fan system cannot be cleaned, and also leads to malfunctions of the fan system.

### SUMMARY

An oil fume purification device and a household appliance are provided by the present invention.

The oil fume purification device according to embodiments of the present invention includes a fan assembly, a water guide member, a filter assembly, and a water collection box. The fan assembly has an air inlet and an air outlet and is configured to form an airflow flowing from the air inlet to the air outlet. The water guide member is disposed at the air inlet of the fan assembly and has an accommodation groove. The accommodation groove has a bottom surface constructed as an inclined surface. The filter assembly is disposed in the accommodation groove, and is configured to filter and condense oil fume to form condensed water. The water collection box is connected at a lower end side of the bottom surface of the accommodation groove, and is configured to collect the condensed water flowing out of the water guide member.

In this way, the bottom surface of the accommodation groove of the water guide member is the inclined surface, and the condensed water from the filter assembly can be guided along the bottom surface of the accommodation groove to the water collection box for collection by means of the water guide member, preventing the condensed water from entering an interior of the fan assembly and causing damages to electrical components inside the fan assembly. Therefore, use safety of the oil fume purification device is improved.

Optionally, the water guide member has a first end wall and a second end wall opposite to the first end wall. The first end wall has a water guide hole. An end of the bottom surface of the accommodation groove connected to the first end wall is lower than an end of the bottom surface of the accommodation groove connected to the second end wall.

In this way, the bottom surface of the accommodation groove can guide the condensed water to flow from the end of the bottom surface of the accommodation groove connected to the second end wall to the end of the bottom surface of the accommodation groove connected to the first end wall, to flow out from the water guide hole of the first end wall.

Optionally, the water guide member has a bottom wall, a first side wall, a second side wall, and a third side wall. The third side wall is preferably located between the first side wall and the second side wall. The bottom wall is preferably formed as a bottom surface of the accommodation groove and has a first wall and a second wall. Preferably, the first wall is connected to the first side wall and the third side wall, and the second wall is connected to the second side wall and the third side wall.

Optionally, each of the first side wall, the second side wall, and the third side wall has a plurality of through holes arranged at intervals in a length direction of the water guide member. The air inlet is in communication with the accommodation groove through the plurality of through holes.

In this way, while the water guide member prevents the foreign matter and the condensed water from entering the fan assembly, the airflow can enter the interior of the fan assembly through the plurality of through holes. The plurality of through holes can enlarge a ventilation area to increase an air intake volume of the oil fume purification device, improving a purification efficiency of the oil fume purification device.

Optionally, the first wall, the third side wall, and the second wall form a stepped arrangement.

In this way, the stepped arrangement formed by the first wall, the third side wall, and the second wall can reduce a contact area between the bottom wall and the fan assembly to mitigate an influence of the bottom wall on the air intake volume of the fan assembly.

Optionally, the fan assembly has a cavity in communication with the air outlet, the water guide member being partially arranged in the cavity.

In this way, the cavity is configured to accommodate the water guide member, and enable the airflow to flow within the cavity, in such a manner that the oil fume can flow from the air inlet through the cavity to the air outlet to be discharged outdoors.

Optionally, the fan assembly includes a volute and a flow guide member connected to the volute, the flow guide member having a flow guide groove in communication with the water guide hole, and the water collection box being disposed at the flow guide member and in communication with the flow guide groove.

In this way, the volute forms a shell of the fan assembly to isolate components inside the fan assembly from an ambient environment, which prevents the oil fume from escaping into a kitchen environment, and reduces harm caused by the oil fume to the ambient environment and a user. The water collection box is connected to an outside of the volute through the flow guide member, which is convenient for the user to disassemble, clean, and maintain the water collection box.

A household appliance according to the embodiments of the present invention includes the oil fume purification device and the cooking appliance connected to the oil fume purification device.

In this way, the oil fume purification device can purify the oil fume generated by the cooking appliance, keep the kitchen environment clean, and reduce an influence of the oil fume on the kitchen environment.

Optionally, the cooking appliance includes a housing assembly connected to the fan assembly, the housing assembly having a mounting groove in communication with the air inlet. Preferably, the water guide member is at least partially disposed in the mounting groove.

In this way, the housing assembly can isolate a charged body inside the cooking appliance from the ambient environment, which can not only prevent the ambient environment from affecting an operation of the charged body, but also prevent the charged body from causing electric shock injuries to the user.

Optionally, the cooking appliance further includes a panel disposed at the housing assembly, the panel having an opening aligned with the mounting groove, the opening facing upwards.

In this way, the panel can function as a support for supporting a heated container. Since the opening of the panel faces upwards, the oil fume generated at an upper end of the panel can enter the oil fume purification device through the opening.

Optionally, the household appliance further includes a grille member removably mounted at a surface of the filter assembly and arranged to cover the mounting groove.

In this way, the grille member can form an appearance of the household appliance. The removable grille member offers operational convenience and is convenient for cleaning and maintenance. Further, the grille member can provide preliminary condensation for the oil fume, which enables part of grease contained in the oil fume to adhere to the grille member and prevents the grease from being discharged from the oil fume purification device.

Additional aspects and advantages of the present invention will be provided at least in part in the following description, or will become apparent at least in part from the following description, or can be learned from practicing of the present invention.

### BRIEF DESCRIPTION OF THE DRAWINGS

The above and/or additional aspects and advantages of the present invention will become more apparent and more understandable from the following description of embodiments taken in conjunction with the accompanying drawings.
FIG. 1 is a schematic structural view of a household appliance according to an embodiment of the present invention.
FIG. 2 is a schematic structural view of a household appliance according to an embodiment of the present invention.
FIG. 3 is a schematic structural view of a household appliance according to an embodiment of the present invention.
FIG. 4 is a schematic structural view of a water guide member according to an embodiment of the present invention.
FIG. 5 is a schematic structural view of a water guide member according to an embodiment of the present invention.
FIG. 6 is a schematic structural view of a water guide member according to an embodiment of the present invention.
FIG. 7 is a schematic structural view of a water guide member according to an embodiment of the present invention.
FIG. 8 is a schematic enlarged view of part I in FIG. 2.

Description of reference numerals of the accompanying drawings: 100, oil fume purification device; 10, fan assembly; 11, air inlet; 12, air outlet; 13, cavity; 14, volute; 15, flow guide member; 16, flow guide groove; 17, passage hole; 18, drain hole; 20, water guide member; 201, accommodation groove; 202, water guide hole; 203, through hole; 21, first end wall; 22, second end wall; 23, bottom wall; 24, first side wall; 25, second side wall; 26, third side wall; 27, first wall; 28, second wall; 30, filter assembly; 40, water collection box; 200, cooking appliance; 210, housing assembly; 211, mounting groove; 220, panel; 221, opening; 300, grille member; 310, support; 320, spacer member; 1000, household appliance.

### DETAILED DESCRIPTION OF THE EMBODIMENTS

Embodiments of the present invention will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limit, the present invention.

In the description of the present invention, it should be understood that the orientation or the position indicated by terms such as "center", "longitudinal", "lateral", "length", "width", "thickness", "over", "below", "front", "rear", "left", "right", "vertical", "horizontal", "top", "bottom", "inner", "outer", "clockwise", and "anti-clockwise" should be construed to refer to the orientation or the position as shown in the drawings, and is only for the convenience of describing the present invention and simplifying the description, rather than indicating or implying that the pointed device or element must have a specific orientation, or be constructed and operated in a specific orientation, and therefore cannot be understood as a limitation of the present invention. In addition, the terms "first" and "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the present invention, "plurality" means at least two, unless otherwise specifically defined.

In the description of the present invention, it should be noted that, unless otherwise clearly specified and limited, terms such as "install", "connect", "connect to", and the like should be understood in a broad sense. For example, it may be a fixed connection or a detachable connection or connection as one piece; mechanical connection or electrical connection or mutual communication; direct connection or indirect connection through an intermediate; internal communication of two components or the interaction relationship between two components. For those of ordinary skill in the art, the specific meaning of the above-mentioned terms in the present invention can be understood according to specific circumstances.

In the present invention, unless expressly stipulated and defined otherwise, the first feature "on" or "under" the second feature may mean that the first feature is in direct contact with the second feature, or the first and second features are in indirect contact through another feature between them. Moreover, the first feature "above" the second feature means that the first feature is directly above or obliquely above the second feature, or simply means that the level of the first feature is higher than that of the second feature. The first feature "below" the second feature means that the first feature is directly below or obliquely below the second feature, or simply means that the level of the first feature is smaller than that of the second feature.

A number of embodiments or examples are provided in the description of the present invention to implement different structures of the present invention. To simplify the description of the present invention, components and arrangements of particular examples will be described below, which are, of course, examples only and are not intended to limit the present invention. Further, reference numerals and/or reference letters may be repeated in different examples of the present invention. Such repetition is for the purpose of simplicity and clarity and does not indicate any relationship between various embodiments and/or arrangements in question. In addition, various examples of specific processes and materials are provided in the present invention. However, those of ordinary skill in the art may be aware of applications of other processes and/or the use of other materials.

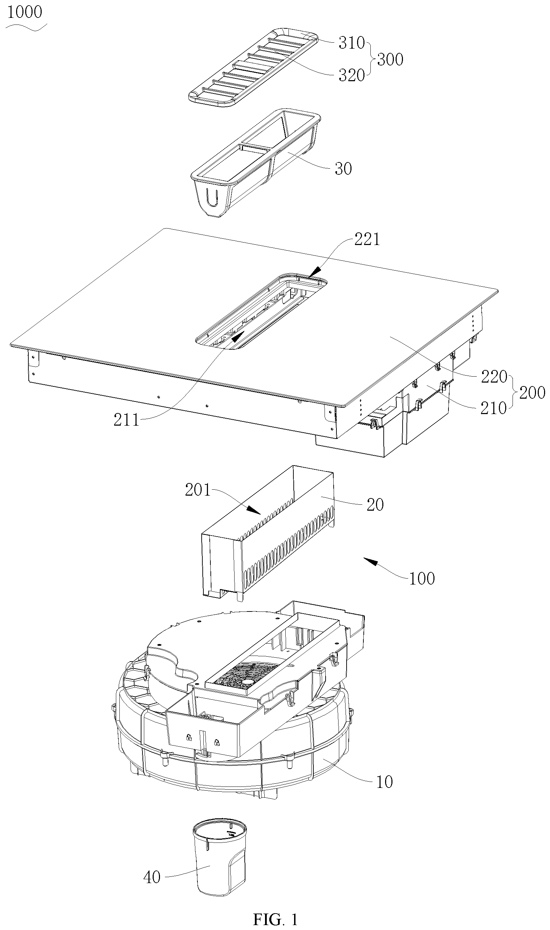

As illustrated in FIG. 1 to FIG. 4, an oil fume purification device 100 according to embodiments of the present invention includes a fan assembly 10, a water guide member 20, a filter assembly 30, and a water collection box 40. The fan assembly 10 has an air inlet 11 and an air outlet 12 and is configured to form an airflow flowing from the air inlet 11 to the air outlet 12. The water guide member 20 is disposed at the air inlet 11 of the fan assembly 10 and has an accommodation groove 201. The accommodation groove 201 has a bottom surface constructed as an inclined surface. The filter assembly 30 is disposed in the accommodation groove 201, and is configured to filter and condense oil fume to form condensed water. The water collection box 40 is connected at a lower end side of the bottom surface of the accommodation groove 201, and is configured to collect the condensed water flowing out of the water guide member 20.

In this way, the bottom surface of the accommodation groove 201 of the water guide member 20 is the inclined surface, and the condensed water from the filter assembly 30 can be guided along the bottom surface of the accommodation groove 201 to the water collection box 40 for collection by means of the water guide member, preventing the condensed water from entering an interior of the fan assembly 10 and causing damages to electrical components inside the fan assembly 10. Therefore, use safety of the oil fume purification device 100 is improved.

Specifically, the oil fume purification device 100 is a piece of kitchen equipment that purifies a kitchen environment. Mounted next to a stove in a kitchen, the oil fume purification device 100 can quickly extract waste produced by combustion of the stove and harmful oil fume generated during cooking and discharge the waste and the harmful oil fume outdoors. In addition, the oil fume is condensed and collected, which reduces pollution and purifies air. The oil fume purification device 100 may be a range hood, including a top-mounted range hood, an under-cabinet range hood, a wall-mounted range hood, and the like.

The fan assembly 10 provides power for flow of the oil fume, which enables the oil fume to flow from the air inlet 11 to the air outlet 12 with an airflow. Therefore, the oil fume is discharged to the outdoors. In the under-cabinet range hood, the air inlet 11 is located above the air outlet 12. A purification speed of the oil fume purification device 100 may be determined by an operation speed of the fan assembly 10. When the fan assembly 10 operates at a fast speed, the airflow has a fast flow speed. Therefore, a large amount of oil fume is extracted per unit time, realizing a high efficiency of the oil fume purification device 100 in purifying the oil fume.

Disposing the water guide member 20 at the air inlet 11 of the fan assembly 10 may be that the water guide member 20 is partially arranged at the air inlet 11. For example, the water guide member 20 passes through the air inlet 11, and a bottom of the water guide member 20 is in contact with an electrical member inside the fan assembly 10 located below the air inlet 11. The accommodation groove 201 is formed by an inner surface of the water guide member 20. The filter assembly 30 is accommodated in the accommodation groove 201 in a height direction, and can be removably connected to the water guide member 20 by means of screw connection, engagement, or the like. The bottom surface of the accommodation groove 201 being the inclined surface may be that an inner surface of a bottom wall 23 of the water guide member 20 may be an inclined surface and an outer surface of the bottom wall 23 of the water guide member 20 may be a flat surface, or that both the inner surface and the outer surface of the bottom wall 23 of the water guide member 20 may be inclined surfaces.

The filter assembly 30 may have a mesh structure having filter holes, or may be a combination of a plurality of mesh structures having filter holes. The filter assembly 30 may be made of multi-layered stacked metallic flat meshes, a metallic wire mesh, or the like, or may be made of a non-metallic mesh. The filter assembly 30 may have an arc-shaped bottom surface or a rectangular bottom surface. The bottom surface of the filter assembly 30 is spaced apart from the bottom surface of the accommodation groove 201. When the oil fume passes through the filter assembly 30, water vapor and grease contained in the oil fume are captured by the filter holes, drip into the water guide member 20 after condensation, and then flow from the water guide member 20 to the water collection box 40 for collection.

The water collection box 40 may be removably connected to the fan assembly 10 by means of screw connection, engagement, or the like. The water collection box 40 and the water guide member 20 are in communication with each other through the fan assembly 10. The condensed water flows into the water collection box 40 from the water guide member 20 along the bottom surface of the accommodation groove 201 through the fan assembly 10. The water collection box 40 may have a regular shape such as a cylinder or a rectangular parallelepiped, or may have an irregular shape.

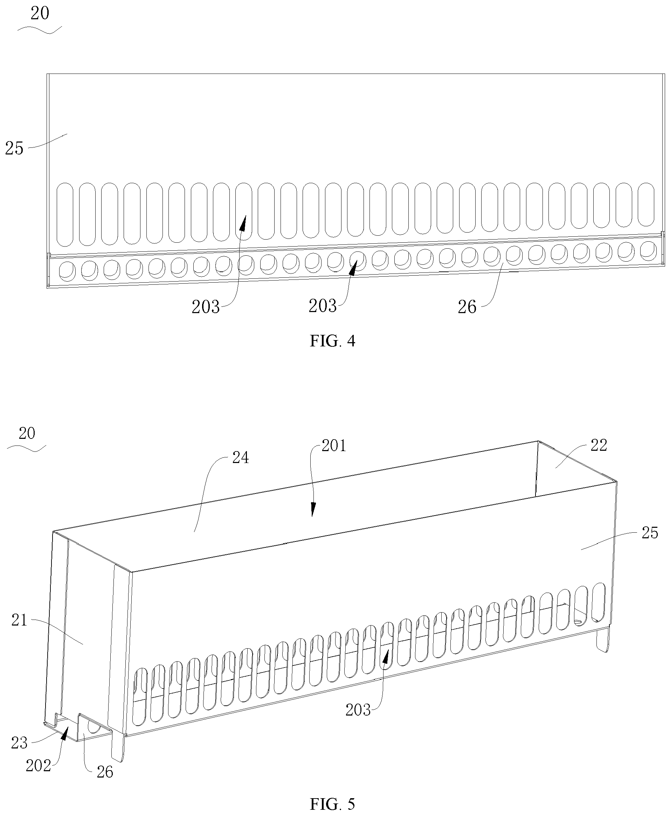

As illustrated in FIG. 4 to FIG. 6, in some embodiments, the water guide member 20 has a first end wall 21 and a second end wall 22 opposite to the first end wall 21. The first end wall 21 has a water guide hole 202. An end of the bottom surface of the accommodation groove 201 connected to the first end wall 21 is lower than an end of the bottom surface of the accommodation groove 201 connected to the second end wall 22.

In this way, the bottom surface of the accommodation groove 201 can guide the condensed water to flow from the end of the bottom surface of the accommodation groove 201 connected to the second end wall 22 to the end of the bottom surface of the accommodation groove 201 connected to the first end wall 21, to flow out from the water guide hole 202 of the first end wall 21.

Specifically, the first end wall 21 and the second end wall 22 may be arranged opposite to each other in the length direction of the water guide member 20. That is, the condensed water flows from the end of the bottom surface of the water guide member 20 connected to the second end wall 22 to the end of the bottom surface of the water guide member 20 connected to the first end wall 21 in the length direction of the water guide member 20, and finally flows into the water collection box 40 through the water guide hole 202. The water guide hole 202 penetrates the first end wall 21 in a thickness direction of the first end wall 21, and may have a regular shape such as a circle, a square, or an oval, or may have an irregular shape.

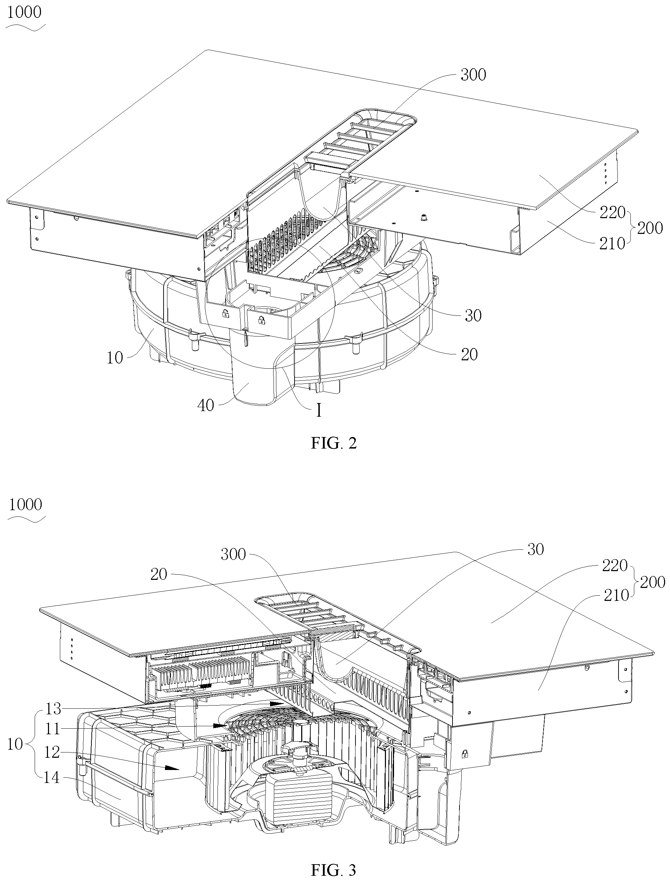

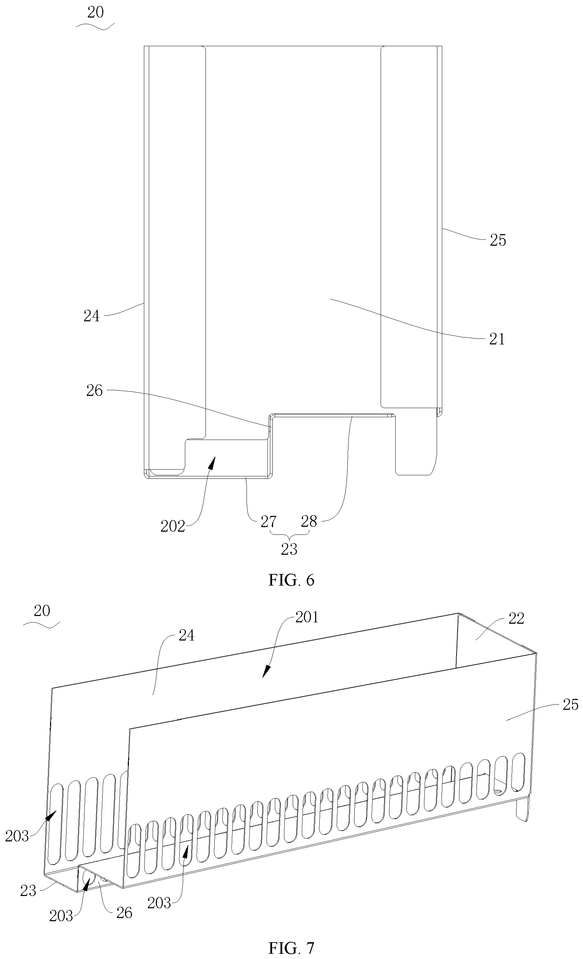

As illustrated in FIG. 3 and FIG. 7, in some embodiments, the water guide member 20 has a bottom wall 23, a first side wall 24, a second side wall 25, and a third side wall 26. The third side wall 26 is located between the first side wall 24 and the second side wall 25. The bottom wall 23 is formed as a bottom surface of the accommodation groove 201 and includes a first wall 27 and a second wall 28. The first wall 27 is connected to the first side wall 24 and the third side wall 26. The second wall 28 is connected to the second side wall 25 and the third side wall 26. Each of the first side wall 24, the second side wall 25, and the third side wall 26 has a plurality of through holes 203 arranged at intervals in a length direction of the water guide member 20. The air inlet 11 is in communication with the accommodation groove 201 through the plurality of through holes 203.

In this way, while the water guide member 20 prevents the foreign matter and the condensed water from entering the fan assembly 10, the airflow can enter the interior of the fan assembly 10 through the plurality of through holes 203. The plurality of through holes 203 can enlarge a ventilation area to increase an air intake volume of the oil fume purification device 100, improving a purification efficiency of the oil fume purification device 100.

Specifically, the bottom wall 23, the first side wall 24, the second side wall 25, and the third side wall 26 may be integrally formed by means of injection molding, or may be connected by means of gluing, welding, or mechanical connection. The bottom wall 23 may be in a shape of a rectangle. Each of the first side wall 24 and the second side wall 25 may be in a shape of a trapezoid. The third side wall 26 may be in a shape of a parallelogram. The accommodation groove 201 may be formed by the first end wall 21, the second end wall 22, the bottom wall 23, the first side wall 24, the second side wall 25, and the third side wall 26 together.

The through holes 203 penetrate the first side wall 24, the second side wall 25, and the third side wall 26 in a thickness direction of the first side wall 24, the second side wall 25, and the third side wall 26. Shapes and quantities of the through holes 203 at the first side wall 24, the through holes 203 at the second side wall 25, and the through holes 203 at the third side wall 26 may be the same or different. For example, twenty-seven circular through holes 203 are formed at each of the first side wall 24, the second side wall 25, and the third side wall 26, or twenty-seven circular through holes 203 are formed at the first side wall 24, twenty-five rectangular through holes 203 are formed at the second side wall 25, and twenty-nine oval through holes 203 are formed at the third side wall 26.

As illustrated in FIG. 6, in some embodiments, the first wall 27, the third side wall 26, and the second wall 28 form a stepped arrangement.

In this way, the stepped arrangement formed by the first wall 27, the third side wall 26, and the second wall 28 can reduce a contact area between the bottom wall 23 and the fan assembly 10 to mitigate an influence of the bottom wall 23 on the air intake volume of the fan assembly 10.

Specifically, a right angle, an acute angle, or an obtuse angle may be formed between the third side wall 26 and each of the first wall 27 and the second wall 28. The fan assembly 10 may be in contact with the first wall 27 or may be in contact with the second wall 28. When the first wall 27 is in contact with the fan assembly 10, an area of the first side wall 24 may be equal to or greater than a total area of the second side wall 25 and the third side wall 26. When the second wall 28 is in contact with the fan assembly 10, an area of the second side wall 25 may be equal to or greater than a total area of the first side wall 24 and the third side wall 26. As a contact area between the fan assembly 10 and each of the first wall 27 and the second wall 28 decreases, an influence on the air intake volume of the fan assembly 10 decreases, and an efficiency of the fan assembly 10 in sucking the oil fume increases.

As illustrated in FIG. 3, in some embodiments, the fan assembly 10 has a cavity 13 in communication with the air outlet 12. The water guide member 20 is partially arranged in the cavity 13.

In this way, the cavity 13 is configured to accommodate the water guide member 20, and enable the airflow to flow within the cavity 13, in such a manner that the oil fume can flow from the air inlet 11 through the cavity 13 to the air outlet 12 to be discharged outdoors.

Specifically, the cavity 13 may be formed by a shell of the fan assembly 10. The cavity 13 is in communication with the air inlet 11 and the air outlet 12. The water guide member 20 is disposed at a position where the cavity 13 is in communication with the air inlet 11. The cavity 13 can be configured to accommodate electrical members inside the fan assembly 10, such as a fan. The fan may be an axial flow fan, including a motor and fan blades. When in operation, the motor drives the fan blades to rotate for sucking the oil fume from the air inlet 11 and discharging the oil fume from the air outlet 12. By controlling a rotational speed of the motor, a rate at which the oil fume purification device 100 purifies the oil fume can be controlled.

As illustrated in FIG. 2, FIG. 3, and FIG. 8, in some embodiments, the fan assembly 10 includes a volute 14 and a flow guide member 15 connected to the volute 14. The flow guide member 15 has a flow guide groove 16 in communication with the water guide hole 202. The water collection box 40 is disposed at the flow guide member 15 and in communication with the flow guide groove 16.

In this way, the volute 14 forms the shell of the fan assembly 10 to isolate components inside the fan assembly 10 from an ambient environment, which prevents the oil fume from escaping into a kitchen environment, and reduces harm caused by the oil fume to the ambient environment and a user. The water collection box 40 is connected to an outside of the volute 14 through the flow guide member 15, which is convenient for the user to disassemble, clean, and maintain the water collection box 40.

Specifically, the volute 14 may be integrally formed, or may be assembled from separate parts. In an embodiment, the volute 14 includes a front plate, a rear plate, and a peripheral plate. The front plate and the rear plate are arranged in parallel. The peripheral plate is connected between the front plate and the rear plate to form the cavity 13 together. The air inlet 11 is formed at the front plate. The air outlet 12 is formed by the front plate, the rear plate, and the peripheral plate. The volute 14 may be made of metal or plastic. Two sides of the peripheral plate may be connected to the front plate and the rear plate respectively through welding, or through threads.

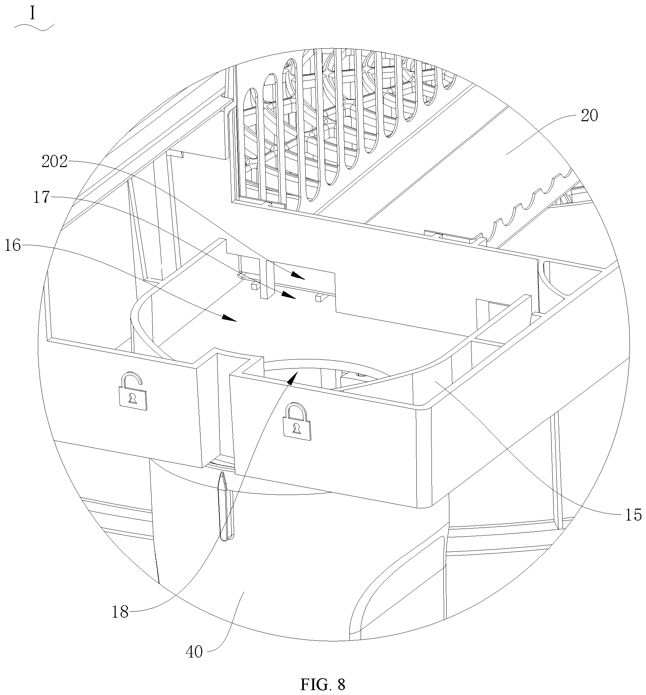

The flow guide member 15 and the volute 14 may be integrally formed, or may be connected through welding. The water collection box 40 is removably mounted at a bottom of the flow guide member 15. As illustrated in FIG. 8, in an embodiment, a side wall of the flow guide member 15 has a passage hole 17 in communication with the water guide hole 202, and the bottom of the flow guide member 15 has a drain hole 18 in communication with the water collection box 40. The condensed water in the water guide member 20 enters the flow guide groove 16 through the passage hole 17, and then flows from the flow guide groove 16 into the water collection box 40 through the drain hole 18.

As illustrated in FIG. 1, a household appliance 1000 according to the embodiments of the present invention includes the oil fume purification device 100 and the cooking appliance 200 connected to the oil fume purification device 100.

In this way, the oil fume purification device 100 can purify the oil fume generated by the cooking appliance 200, keep the kitchen environment clean, and reduce an influence of the oil fume on the kitchen environment.

Specifically, the household appliance 1000 may be an all-in-one range hood and cooktop, including but not limited to an under-cabinet range hood integrated with an induction cooker. The cooking appliance 200 may be an induction cooker. The induction cooker generates oil fume during cooking. The oil fume purification device 100 can filter and condense the oil fume, collect filtered-out impurities in the filter assembly 30, collect the condensed water in the water collection box 40, and discharge the oil fume obtained after the filtering outdoors, which reduce the influence of the oil fume on the kitchen environment.

As illustrated in FIG. 1 and FIG. 3, in some embodiments, the cooking appliance 200 includes a housing assembly 210 connected to the fan assembly 10. The housing assembly 210 has a mounting groove 211 in communication with the air inlet 11. The water guide member 20 is at least partially disposed in the mounting groove 211.

In this way, the housing assembly 210 can isolate a charged body inside the cooking appliance 200 from the ambient environment, which can not only prevent the ambient environment from affecting an operation of the charged body, but also prevent the charged body from causing electric shock injuries to the user.

Specifically, the housing assembly 210 may be connected to the fan assembly 10 through threads. The mounting groove 211 penetrates the housing assembly 210 in a height direction of the housing assembly 210. A shape and a size of the mounting groove 211 are adapted to those of the water guide member 20, in such a manner that the water guide member 20 can be at least partially disposed in the mounting groove 211. For example, the mounting groove 211 and the water guide member 20 are both rectangular in shape and have a same size. All or a part of the water guide member 20 may be disposed in the mounting groove 211. The part of the water guide member 20 being disposed in the mounting groove 211 may mean that an upper end, a lower end, or a middle of the water guide member 20 is disposed in the mounting groove 211.

In an embodiment, the housing assembly 210 is provided with an electromagnetic assembly. The electromagnetic assembly includes a heater and a controller. The heater includes a plurality of heating plates distributed at two sides of the mounting groove 211. The heating plates can generate heat after being energized to achieve a purpose of heating. The controller, which is a circuit board integrating various electronic components, is connected to the heater and can be configured to adjust and control the heater.

As illustrated in FIG. 1, in some embodiments, the cooking appliance 200 further includes a panel 220 disposed at the housing assembly 210, the panel 220 having an opening 221 aligned with the mounting groove 211. The opening 221 faces upwards.

In this way, the panel 220 can function as a support for supporting a heated container. Since the opening 221 of the panel 220 faces upwards, the oil fume generated at an upper end of the panel 220 can enter the oil fume purification device 100 through the opening 221.

Specifically, the panel 220 may be an operation panel 220 of an induction cooker, and is usually made of glass or metal. The panel 220 is provided with buttons and a display screen, in such a manner that operation modes of the induction cooker can be selected and displayed. The opening 221 penetrates the panel 220 in a thickness direction of the panel 220. A shape and a size of the opening 221 can be adapted to those of the mounting groove 211, and thus the water guide member 20 can be mounted in the mounting groove 211 through the opening 221.

As illustrated in FIG. 1 and FIG. 2, in some embodiments, the household appliance 1000 includes a grille member 300 removably mounted at a surface of the filter assembly 30 and arranged to cover the mounting groove 211.

In this way, the grille member 300 can form an appearance of the household appliance 1000. The removable grille member 300 offers operational convenience and is convenient for cleaning and maintenance. Further, the grille member 300 can provide preliminary condensation for the oil fume, which enables part of grease contained in the oil fume to adhere to the grille member 300 and prevents the grease from being discharged from the oil fume purification device 100.

Specifically, the grille member 300 may include a support 310 and a plurality of spacer members 320 disposed at the support 310. The plurality of spacer members 320 are arranged at intervals in a length direction of the grille member 300. A flow guide channel is formed by the plurality of spacer members 320 and the support 310 together. The oil fume enters the fan assembly 10 from the flow guide channel along with the airflow. The plurality of spacer members 320 can divide the oil fume into a plurality of streams to increase the dispersion degree of the oil fume. Therefore, an amount of oil fume sucked in by the oil fume purification device 100 is increased, which improves an efficiency of oil fume purification.

Reference throughout this specification to "an embodiment", "some embodiments", "an illustrative embodiment", "an example", "a specific example", or "some examples" means that a particular feature, structure, material, or characteristic described in connection with the embodiment or example is included in at least one embodiment or example of the present invention. The appearances of the above phrases in various places throughout this specification are not necessarily referring to the same embodiment or example. Further, the particular features, structures, materials, or characteristics may be combined in any suitable manner in one or more embodiments or examples.

## Claims

1. An oil fume purification device (100), comprising:
a fan assembly (10) having an air inlet (11) and an air outlet (12), and configured to form an airflow flowing from the air inlet (11) to the air outlet (12);
a water guide member (20) disposed at the air inlet (11) of the fan assembly (10), the water guide member (20) having an accommodation groove (201), and the accommodation groove (201) having a bottom surface constructed as an inclined surface;
a filter assembly (30) disposed in the accommodation groove (201), and configured to filter and condense oil fume to form condensed water; and
a water collection box (40) connected at a lower end side of the bottom surface of the accommodation groove (201), and configured to collect the condensed water flowing out of the water guide member (20).

2. The oil fume purification device (100) according to claim 1, wherein the water guide member (20) has a first end wall (21) and a second end wall (22) opposite to the first end wall (21), the first end wall (21) has a water guide hole (202), and an end of the bottom surface of the accommodation groove (201) connected to the first end wall (21) is lower than an end of the bottom surface of the accommodation groove (201) connected to the second end wall (22).

3. The oil fume purification device (100) according to claim 1 or 2, wherein:
the water guide member (20) has a bottom wall (23), a first side wall (24), a second side wall (25), and a third side wall (26);
the third side wall (26) is located between the first side wall (24) and the second side wall (25);
the bottom wall (23) is formed as the bottom surface of the accommodation groove (201) and has a first wall (27) and a second wall (28), the first wall (27) is connected to the first side wall (24) and the third side wall (26), and the second wall (28) is connected to the second side wall (25) and the third side wall (26); and
each of the first side wall (24), the second side wall (25), and the third side wall (26) has a plurality of through holes (203) arranged at intervals in a length direction of the water guide member (20), and the air inlet (11) is in communication with the accommodation groove (201) through the plurality of through holes (203).

4. The oil fume purification device (100) according to claim 3, wherein the first wall (27), the third side wall (26), and the second wall (28) form a stepped arrangement.

5. The oil fume purification device (100) according to any one of claims 1-4, wherein the fan assembly (10) has a cavity (13) in communication with the air outlet (12), and the water guide member (20) is partially arranged in the cavity (13).

6. The oil fume purification device (100) according to any one of claims 2-5, wherein the fan assembly (10) comprises a volute (14) and a flow guide member (15) connected to the volute (14), the flow guide member (15) has a flow guide groove (16) in communication with the water guide hole (202), and the water collection box (40) is disposed at the flow guide member (15) and in communication with the flow guide groove (16).

7. A household appliance (1000), comprising:
the oil fume purification device (100) according to any one of claims 1 to 6; and
a cooking appliance (200) connected to the oil fume purification device (100).

8. The household appliance (1000) according to claim 7, wherein the cooking appliance (200) comprises a housing assembly (210) connected to the fan assembly (10), the housing assembly (210) has a mounting groove (211) in communication with the air inlet (11), and the water guide member (20) is at least partially disposed in the mounting groove (211).

9. The household appliance (1000) according to claim 8, wherein the cooking appliance (200) further comprises a panel (220) disposed at the housing assembly (210), the panel (220) having an opening (221) aligned with the mounting groove (211), the opening (221) facing upwards.

10. The household appliance (1000) according to claim 8 or 9, further comprising a grille member (300) removably mounted at a surface of the filter assembly (30) and arranged to cover the mounting groove (211).
